# EUROPÄISCHE PATENTSCHRIFT

(11) **EP 1 827 771 B1**
(45) Veröffentlichungstag und Bekanntmachung des Hinweises auf die Patenterteilung: **02.03.2011**
(21) Anmeldenummer: 05819199.0
(22) Anmeldetag: 06.12.2005
(51) Int. Cl.: B26B 13/26, A01G 3/02, B26B 17/02, B23D 21/06, B23D 29/02

(54) **HANDBETÄTIGTES SCHNEIDGERÄT, INSBESONDERE ASTSCHERE**
HAND-OPERATED CUTTING DEVICE, PARTICULARLY A TREE PRUNER
OUTIL MANUEL DE COUPE, NOTAMMENT CISAILLES

(30) Priorität: 24.12.2004 DE 102004062521
(43) Veröffentlichungstag der Anmeldung: 05.09.2007
(73) Patentinhaber: GARDENA Manufacturing GmbH, 89079 Ulm (DE)
(72) Erfinder: REICHART, Vincent, 89075 Ulm (DE)
(86) Internationale Anmeldenummer: PCT/EP2005/013065
(87) Internationale Veröffentlichungsnummer: WO 2006/072309

(56) Entgegenhaltungen:
- DE-U1- 9 403 908
- US-A1- 2001 005 941

## Beschreibung

Die Erfindung betrifft ein handbetätigtes Schneidgerät, insbesondere eine Astschere oder Heckenschere, mit zwei Griffhebeln.

Bei über Griffhebel handbetätigten Astscheren muss der Benutzer z. T. erhebliche Kräfte aufwenden, wenn dickere Äste zu durchtrennen sind. Neben einfachen Scheren-Konstruktionen, bei welchen die Messer starr mit den Handgriffhebeln verbunden sind, sind auch Ausführungen bekannt, bei welchen eine oder beide Messer an Scherenarmen gelenkig mit den Griffhebeln verbunden sind und über weitere Gelenke, Hebelanordnungen oder Zahngetriebe ein verbessertes Schneidverhalten angestrebt ist.

Aus dem deutschen Gebrauchsmuster DE 94 03 908 U1 ist eine Schere zum Schneiden von Brennholz und Metallschrott bekannt, bei der zwischen den Scherbacken und den Griffhebeln eine Hebelgelenkanordnung angeordnet ist. Hierbei weist die Hebelanordnung zwei in der Krafteinleitung hintereinander auf einem gemeinsamen Schlitten bewegbare Kniehebel auf, welche bewirken, dass die Schließkraft mit zunehmender Schließbewegung progressiv steigt.

Die Offenlegungsschrift US 2001/005941 A1 zeigt ein Schneidgerät mit zwei Griffhebeln und zwei Scherenarmen. Dabei sind die Scherenarme in einer Scherengelenkanordnung drehbar miteinander gelagert und an weiteren Gelenken mit je einem der beiden Griffhebel verbunden. In Richtung der Scherengelenkanordnung befindet sich vor diesen Gelenken eine Hebelgelenkanordnung, über welche die Griffhebel relativ zueinander verschwenkbar gelagert sind. Die Hebelgelenkanordnung weist ein Brückenglied auf, welches für jeden Griffhebel eines von zwei beabstandeten Hebelgelenken enthält.

Der vorliegenden Erfindung liegt die Aufgabe zugrunde, derartige Schneidgeräte mit vorteilhafter Handhabbarkeit kostengünstig herstellbar zu gestalten.

Die Erfindung ist im Patentanspruch 1 beschrieben. Die abhängigen Ansprüche enthalten vorteilhafte Ausgestattungen und Weiterbildungen der Erfindung.

Das erfindungsgemäße Schneidgerät zeigt, insbesondere in der Ausführung als Astschere mit großer Krafteinwirkung über die Griffhebel, ein vorteilhaftes Schneidverhalten, und ist einfach und stabil aufgebaut. Ineinandergreifende Verzahnungen der beiden Hebelgriffe gewährleisten deren symmetrische Führung in allen Schneidpositionen. Die Schere ist insbesondere auch von Vorteil in einer Ausführung als Heckenschere.

Scherenanordnungen mit Zahngetrieben sind an sich bekannt, wobei aber typischerweise ein Verzahnungseingriff zwischen einem Griffhebel und einer Klinge und somit eine andere Funktion der Verzahnungen vorliegt.

Die Erfindung ist nachfolgend anhand eines bevorzugten Beispiels unter Bezugnahme auf die Abbildungen noch eingehend veranschaulicht. Dabei zeigt:
- Fig. 1: eine Schere in geöffnetem Zustand,
- Fig. 2: die Schere nach Fig. 1 in geschlossenem Zustand.
- Fig. 3: einen vergrößerten Ausschnitt mit dem Zahngetriebe
- Fig. 4: eine Heckenschere

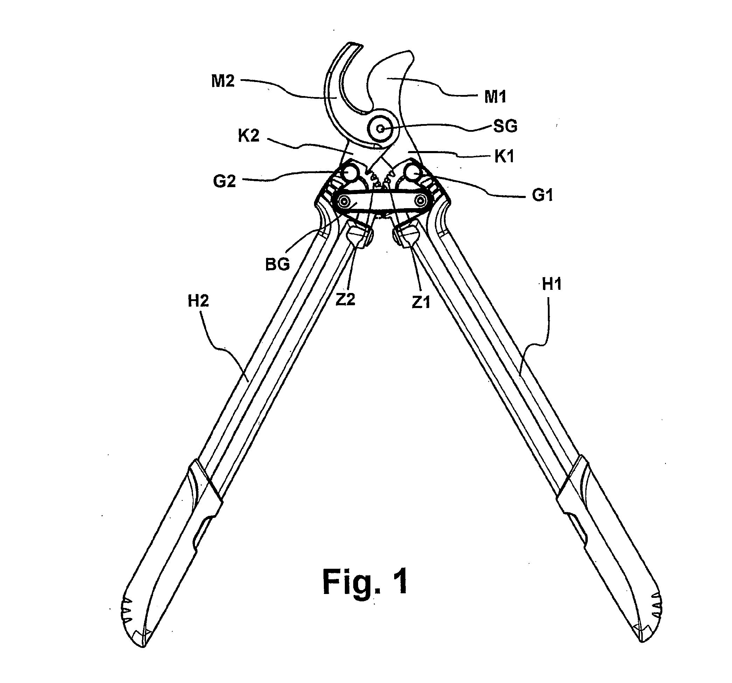

Die in Fig. 1 in geöffnetem Zustand skizzierte Astschere besitzt in an sich bekannter Weise einen ersten Scherenarm K1 mit einem ersten Messer M1 und einen zweiten Scherenarm K2 mit einem Gegenmesser M2. Für die beiden Scherenarme sind verschiedene andere Ausführungen, insbesondere mit gleichartigen Scherenarmen oder mit einem Scherenarm als Amboss bekannt und gebräuchlich. Die beiden Scherenarme sind in einem Scherengelenk SG relativ zueinander verdrehbar verbunden. Die Scherenarme weisen auf den den Messern abgewandten Seiten des Scherengelenks SG je ein weiteres. Gelenk G1, G2 zur Verbindung mit je einem der beiden Griffhebel H1 bzw. H2 auf.

Die beiden Griffhebel H1, H2 sind in einer Hebelgelenkanordnung relativ zueinander verschwenkbar verbunden. Die Hebelgelenkanordnung enthält insbesondere ein im wesentlichen starres Brückenglied, an welchem die beiden Griffhebel in Gelenken GH1, GH2 drehbar gelagert sind. Zwischen den beiden Gelenken GH1, GH2 einander zugewandt weisen die Griffhebel um die Hebelgelenke gekrümmte Verzahnungen Z1 bzw. Z2 auf, welche bei Verschwenkung der Handgriffhebel relativ zueinander und zu dem Brückenglied in allen Schwenkpositionen ineinandergreifen. Die Verzahnungen Z1, Z2 liegen vorzugsweise auf Kreisbögen um die Hebelgelenke GH1, GH2.

Auf den den Handgriffen HG der Griffhebel H1, H2 abgewandten Seiten der Hebelgelenke GH1, GH2 sind die Griffhebel in den weiteren Gelenken G1 bzw. G2 mit den Scherenarmen gelenkig verbunden.

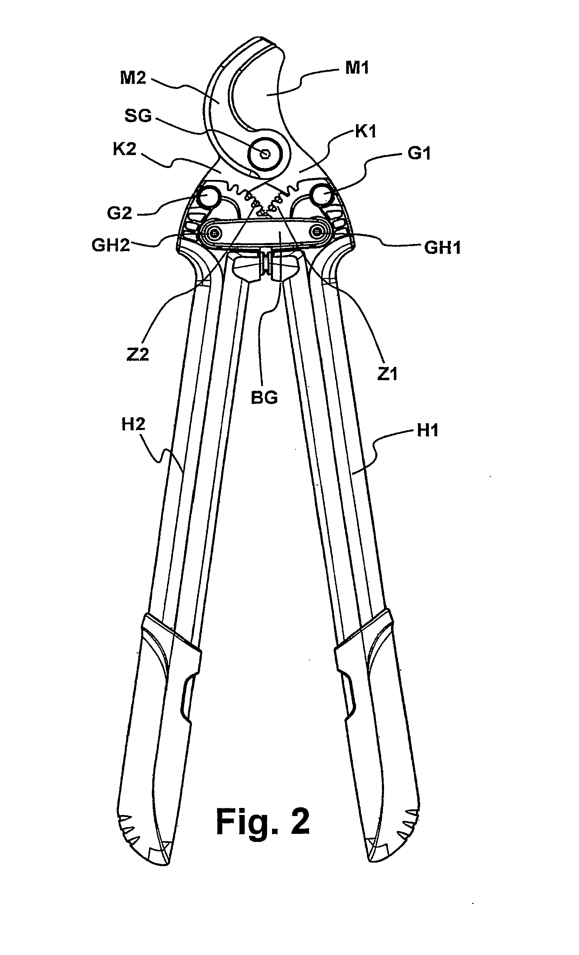

Eine Kraft auf die verschiedenen Gelenke der Schere tritt insbesondere beim Durchschneiden eines Schnittguts zwischen den beiden Messern unter Zusammendrücken der beiden Griffhebel H1, H2 aus der in Fig. 1 skizzierten Stellung in die in Fig. 2 skizzierte geschlossene Stellung auf. Dabei werden durch die vom Benutzer aufgebrachte Kraft auf die Griffhebel diese auch im Bereich des Brückenglieds BG bzw. an den an diesem vorgesehenen Hebelgelenken GH1, GH2 aufeinander zu gedrückt. Diese Andruckkraft wird in einer ersten vorteilhaften Ausführungsform durch die Eigensteifigkeit des Brückenglieds BG aufgefangen. Das Brückenglied BG besteht vorzugsweise aus zwei im wesentlichen gleichen Gliedern, welche senkrecht zur Zeichenebene voneinander beabstandet und über Gelenkbolzen, Niete oder dergleichen in den Hebelgelenken GH1, GH2 unter Einschluss der beiden Griffhebel miteinander verbunden sind.

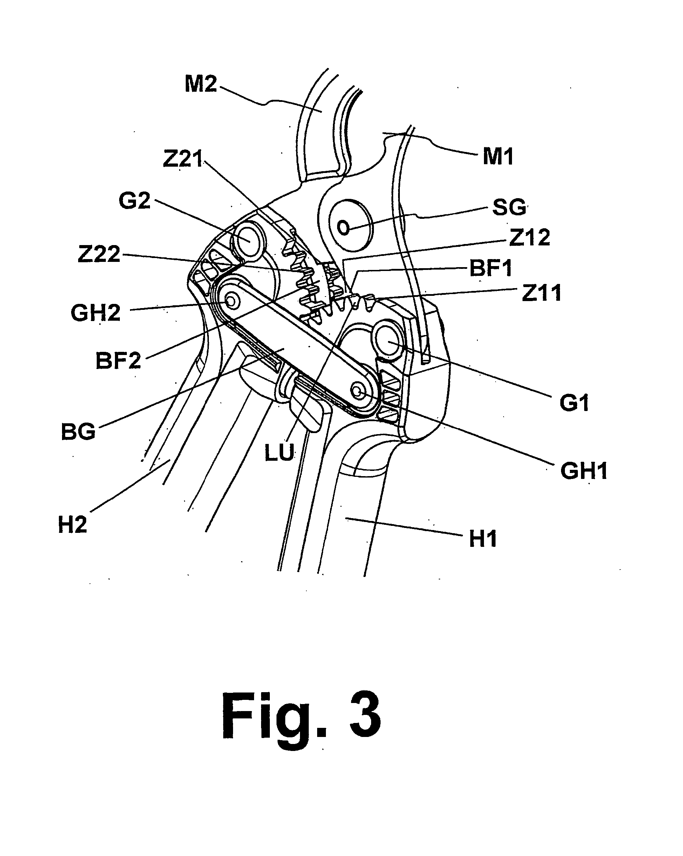

In bevorzugter Ausführung kann die beim Schließen im Bereich der Hebelgelenke auftretende, die beiden Griffhebel in diesem Bereich aufeinander zudrückende Kraft dadurch aufgefangen werden, dass konzentrisch zu den ineinander greifenden Verzahnungen Z1, Z2 und gegen diese axial, d. h. senkrecht zur Zeichenebene der Fig.1 und Fig. 2 versetzt einander zuweisende Kreisbogenflächen BF1, BF2 (Fig. 3) um die Hebelgelenke GH1, GH2 vorgesehen, welche die beiden Griffhebel beim Schließen der Schere wischen den Hebelgelenken gegeneinander abstützen, ohne dass das Brückenglied BG auf Druck zwischen den beiden Hebelgelenken GH1, GH2 beansprucht ist. Die Anlageflächen sind radial bezüglich der Hebelgelenke GH1, GH2 so bemessen, dass keine radiale Belastung der ineinander greifenden Verzahnungen auftritt, d. h. die Zahnspitzen der einen Verzahnung nicht auf den Zahngrund der jeweils anderen Verzahnung drücken.

In vorteilhafter Ausführung können die Verzahnungen Z1, Z2 jeweils zwei Zahnbögen Z11, Z12 bzw. Z21, Z22 aufweisen, welche senkrecht zur Zeichenebene voneinander beabstandet sind und welche die dem Scherengelenk SG abgewandten Enden der Scherenarme K1, K2 senkrecht zur Zeichenebene zwischen sich einschließen, wie aus dem vergrößerten Ausschnitt in Fig. 3 des Gelenkbereichs der Schere ersichtlich ist. Die Verzahnungen der beiden senkrecht zur Zeichenebene gegeneinander versetzten Zahnbögen ein und desselben Griffhebels sind vorteilhafterweise auf Lücke LU gegeneinander um das jeweilige Hebelgelenk GH1 bzw. GH2 winkelversetzt. Hierdurch können die beiden Griffhebel formidentisch aufgebaut sein. Die beiden Zahnbögen Z11 und Z12 der mit dem ersten Griffhebel H1 verbundenen ersten Verzahnung Z1 greifen jeder für sich in je einen Zahnbogen Z22 bzw. Z21 der zweiten Verzahnung Z2 am zweiten Griffhebel H2 ein.

Kraftabstützende Anlageflächen BF1 bzw. BF2 der erwähnten kreisbogenförmigen Art sind in bevorzugter Ausführung in Richtung senkrecht zur Zeichenebene zwischen zwei beabstandeten Zahnbögen angeordnet. Die beiden Griffhebel können dabei unverändert formidentisch aufgebaut sein. Vorzugsweise sind im Gelenkbereich die Griffhebel in Richtung senkrecht zur Zeichenebene zwischen zwei Gliedern des Brückenglieds BG eingeschlossen. Das Brückenglied kann aber auch in Richtung senkrecht zur Zeichenebene verdeckt innerhalb der Griffhebel, insbesondere auch in der Mitte der Griffhebel liegen.

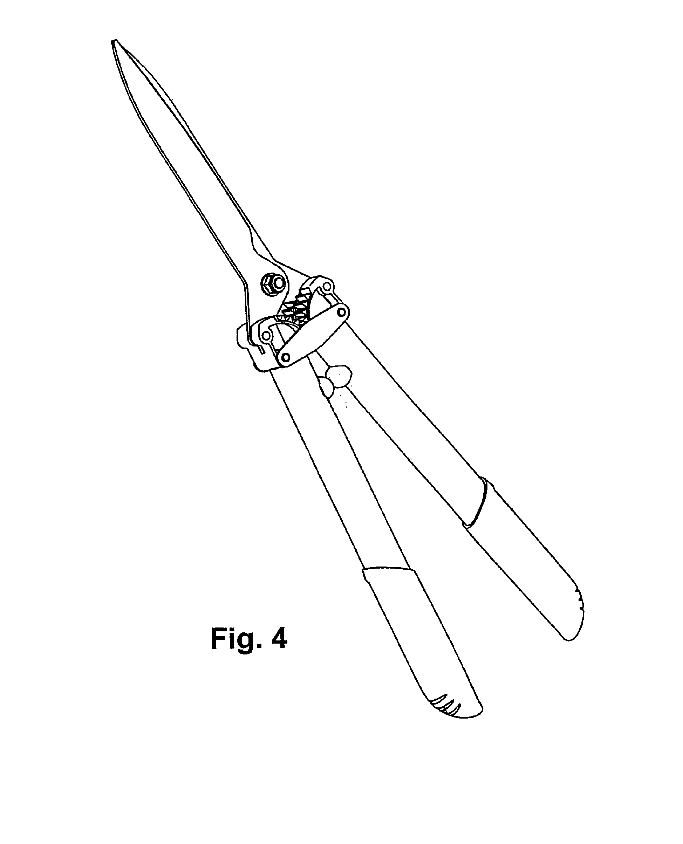

In Fig. 4 ist eine Heckenschere mit einer Zahngetriebe-Kopplung der beschriebenen Art zwischen den beiden Griffhebeln skizziert.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere kann das Schneidgerät von anderer Art als die skizzierte Astschere sein, beispielsweise eine Heckenschere oder auch eine Zange.

## Patentansprüche

1. Schneidgerät, insbesondere Astschere oder Heckenschere, mit zwei Griffhebeln(H1, H2) und zwei Scherenarmen (K1, K2), wobei die Scherenarme (K1, K2), in einer Scherengelenkanordnung (SG) drehbar miteinander verbunden und an weiteren Gelenken (G1, G2) mit je einem der beiden Griffhebel (H1, H2) verbunden sind, wobei die Griffhebel (H1, H2) über eine Hebelgelenkanordnung relativ zueinander verschwenkbar sind, und wobei die Hebelgelenkanordnung ein Brückenglied (BG) aufweist, welches für jeden Hebelgriff (H1, H2) eines von zwei beabstandeten Hebelgelenken (GH1, GH2) enthält,
**dadurch gekennzeichnet,**
**dass** die weiteren Gelenke (G1, G2) auf der den Handgriffen (HG) der Griffhebel (H1, H2) abgewandten Seite der Hebelgelenke (GH1, GH2) angeordnet sind.

2. Schneidgerät nach Anspruch 1, **dadurch gekennzeichnet, dass** die Griffhebel zwischen den Hebelgelenken einander zugewandt gekrümmte Verzahnungen (Z1, Z2) aufweisen, welche in allen Schwenkpositionen ineinander greifen.

3. Schneidgerät nach Anspruch 2, **dadurch gekennzeichnet, dass** die Krümmungen der beiden Verzahnungen Kreisbögen um die Hebelgelenke (GH1, GH2) bilden.

4. Schneidgerät nach Anspruch 3, **dadurch gekennzeichnet, dass** die Krümmungsradien für beide Verzahnungen gleich sind.

5. Schneidgerät nach einem der Ansprüche 2 bis 4, **dadurch gekennzeichnet, dass** die beiden Verzahnungen jeweils zwei in Richtung der Drehachsen der Hebelgelenk versetzte Zahnbögen aufweisen.

6. Schneidgerät nach Anspruch 5, **dadurch gekennzeichnet, dass** die beiden Zahnbögen ein und derselben Verzahnung jeweils um das Hebelgelenk gegeneinander auf Lücke versetzt sind.

7. Schneidgerät nach einem der Ansprüche 1 bis 6, **dadurch gekennzeichnet, dass** die beiden Griffhebel (H1, H2) beim Schließen der Schere über die Hebelgelenke (GH1, GH2) und das Brückenglied (BG) gegeneinander abgestützt sind.

8. Schneidgerät nach einem der Ansprüche 1 bis 6, **dadurch gekennzeichnet, dass** die beiden Griffhebel (H1, H2) beim Schließen der Schere über einander zugewandte und aneinander anliegende Kreisbogenflächen um die Hebeigelenke (GH1, GH2) gegeneinander abgestützt sind.

## Claims

1. Cutting tool, in particular a pair of tree or hedge pruners, having two grip levers (H1, H2) and two pruner arms (K1, K2), wherein the pruner arms (K1, K2) are connected to one another in a rotatable manner in a pruner-articulation arrangement (SG) and are connected to in each case one of the two grip levers (H1; H2) at further articulations (G1, G2), wherein the grip levers (H1, H2) can be pivoted relative to one another via a lever-articulation arrangement, and wherein the lever-articulation arrangement has a bridge member (BG) which, for each lever grip (H1, H2), contains one of two spaced-apart lever articulations (GH1, GH2), **characterized in that** the further articulations (G1, G2) are arranged on that side of the lever articulations (GH1, GH2) which is directed away from the hand grips (HG) of the grip levers (H1, H2).

2. Cutting tool according to Claim 1, **characterized in that** the grip levers have toothing formations (Z1, Z2) which are curved towards one another between the lever articulations and engage one inside the other in all pivoting positions.

3. Cutting tool according to Claim 2, **characterized in that** the curvatures of the two toothing formations form arcs of a circle around the lever articulations (GH1, GH2).

4. Cutting tool according to Claim 3, **characterized by** equal radii of curvature for the two toothing formations.

5. Cutting tool according to one of Claims 2 to 4, **characterized in that** the two toothing formations each have two arcuate toothed members offset in the direction of the axes of rotation of the lever articulations.

6. Cutting tool according to Claim 5, **characterized in that** the two arcuate toothed members of one and the same toothing formation are staggered in relation to each other in each case around the lever articulation.

7. Cutting tool according to one of Claims 1 to 6, **characterized in that** the two grip levers (H1, H2) are supported in relation to one another, upon closure of the pruners, via the lever articulations (GH1, GH2) and the bridge member (BG).

8. Cutting tool according to one of Claims 1 to 6, **characterized in that** the two grip levers (H1, H2) are supported in relation to one another, upon closure of the pruners, via facing and abutting circle-arc surfaces around the lever articulations (GH1, GH2).

## Revendications

1. Appareil de coupe, notamment coupe-branches ou taille-haie, avec deux leviers de préhension (H1, H2) et deux bras de cisaille (K1, K2), les bras de cisaille (K1, K2) étant reliés entre eux de façon à pouvoir tourner dans un dispositif d'articulation de cisaille (SG) et étant reliés au niveau d'autres articulations (G1, G2) avec respectivement un des deux leviers de préhension (H1, H2), les leviers de préhension (H1, H2) pouvant pivoter l'un par rapport à l'autre de façon relative par l'intermédiaire d'un dispositif d'articulation de levier et le dispositif d'articulation de levier comportant un élément de pont (BG) contenant pour chaque poignée de levier (H1, H2) une des deux articulations de levier (GH1, GH2) écartées, **caractérisé en ce que** les articulations (G1, G2) supplémentaires sont disposées sur le côté des articulations de levier (GH1, GH2) opposé aux poignées manuelles (HG) des leviers de préhension (H1, H2).

2. Appareil de coupe selon la revendication 1, **caractérisé en ce que** les leviers de préhension comportent des endentements (Z1, Z2) incurvés orientés les uns vers les autres entre les articulations de levier, lesdits endentements s'imbriquant les uns dans les autres dans toutes les positions de pivotement.

3. Appareil de coupe selon la revendication 2, **caractérisé en ce que** les courbures des deux endentements forment des arcs de cercle autour des articulations de levier (GH1, GH2).

4. Appareil de coupe selon la revendication 3, **caractérisé en ce que** les rayons de courbure sont identiques pour les deux endentements.

5. Appareil de coupe selon l'une quelconque des revendications 2 à 4, **caractérisé en ce que** les deux endentements comportent respectivement deux arcs dentés décalés en direction des axes de rotation des articulations de levier.

6. Appareil de coupe selon la revendication 5, **caractérisé en ce que** les deux arcs dentés d'un seul et même endentement sont respectivement décalés l'un par rapport à l'autre au niveau de l'espace vide entourant l'articulation de levier.

7. Appareil de coupe selon l'une quelconque des revendications 1 à 6, **caractérisé en ce que** les deux leviers de préhension (H1, H2) s'appuient l'un contre l'autre lors de la fermeture de la cisaille par le biais des articulations de levier (GH1, GH2) et de l'élément de pont (BG).

8. Appareil de coupe selon l'une quelconque des revendications 1 à 6, **caractérisé en ce que** les deux leviers de préhension (H1, H2) s'appuient l'un contre l'autre lors de la fermeture de la cisaille par le biais des surfaces en arc de cercle reposant l'une contre l'autre et orientées l'une vers l'autre, autour des articulations de levier (GH1, GH2).
